# EUROPÄISCHE PATENTSCHRIFT

(11) **EP 2 191 156 B1**
(45) Veröffentlichungstag und Bekanntmachung des Hinweises auf die Patenterteilung: **27.06.2012**
(21) Anmeldenummer: 08785538.3
(22) Anmeldetag: 14.08.2008
(51) Int. Cl.: F16D 23/06, F16H 63/30

(54) **ELEKTRISCH BETÄTIGTE KUPPLUNGSEINRICHTUNG**
ELECTRICALLY ACTUATED CLUTCH DEVICE
EMBRAYAGE À COMMANDE ÉLECTRIQUE

(30) Priorität: 07.09.2007 DE 102007042695
(43) Veröffentlichungstag der Anmeldung: 02.06.2010
(73) Patentinhaber: Volkswagen Aktiengesellschaft, 38436 Wolfsburg (DE)
(72) Erfinder: KRUSE, Georg, 38518 Gifhorn (DE); WARNECKE, Raimar, 38179 Schwülper (DE); STREMLAU, Thomas, 38539 Müden (DE)
(86) Internationale Anmeldenummer: PCT/EP2008/006674
(87) Internationale Veröffentlichungsnummer: WO 2009/033545

(56) Entgegenhaltungen:
- WO-A-2004/109136
- WO-A-2005/036007
- DE-A1-102007 010 369
- US-A1- 2005 040 002
- US-A1- 2007 135 260
- US-B1- 6 605 019

## Beschreibung

Die Erfindung betrifft eine elektrisch betätigte Kupplungseinrichtung zum wahlweisen Herstellen und Lösen einer drehfesten Verbindung zwischen einer Schaltwelle und einem koaxial auf der Schaltwelle angeordneten Schaltkörper durch elektrisch angesteuerte Verstellung eines Koppelgliedes, das zwischen einem Lösezustand, in dem die Schaltwelle und der Schaltkörper gegeneinander verdrehbar sind, und einem Koppelzustand, in dem das Koppelglied sowohl die Schaltwelle als auch das Schaltelement drehfest kontaktiert, verstellbar ist.

Die Erfindung betrifft weiter ein Verfahren zum Schalten einer Kupplungsvorrichtung.

Eine gattungsgemäße Kupplungseinrichtung ist bekannt aus der JP 2005-137169A. Diese Druckschrift offenbart eine Kupplungseinrichtung zur Zu- und Abschaltung der Kopplung einer Elektromaschine mit der Hinterachse eines Kraftfahrzeugs. Mit Hilfe der Kupplungseinrichtung ist eine drehfeste Verbindung zwischen einer ersten, hier Schaltwelle genannten Welle und einer koaxial zu dieser angeordneten zweiten Welle, die hier Schaltkörper genannt wird, herstellbar bzw. lösbar. Gekoppelt mit der inneren Welle ist ein sechseckiger Klemmkörper vorgesehen, der von dem zylindrischen Innenrand der äußeren Welle beabstandet ist. In dem Zwischenraum zwischen dem Klemmkörper und der Innenwandung der äußeren Welle ist ein Käfig mit sechs äquidistant über den Umfang verteilten Kugeln vorgesehen. Der Durchmesser der Kugeln ist so auf den Abstand zwischen dem Klemmkörper und der Innenwand der äußeren Welle abgestimmt, dass der senkrechte Abstand zwischen den Seitenmitten des von dem Klemmkörper gebildeten Sechsecks von der Innenwand der äußeren Welle größer ist als der Durchmesser der Kugeln und der senkrechte Abstand zwischen den Ecken des Klemmkörpers und der Innenwand der äußeren Welle kleiner ist als der Durchmesser der Kugeln. In der Lösestellung sind die Kugeln benachbart zu der Seitenmitte des Klemmkörpers angeordnet, so dass keine Kopplung zwischen den Wellen besteht. Zur Herstellung einer drehfesten Verbindung zwischen den Wellen wird der Käfig mittels einer elektromagnetischen Betätigungsvorrichtung so weit gedreht, dass die Kugeln benachbart zu den Ecken des Klemmkörpers zu liegen kommen und sich zwischen dem Klemmkörper und der Innenwand der Außenwelle verkeilen. Hierdurch wird eine drehfeste Verbindung zwischen der Außenwelle und dem Klemmkörper und somit der Innenwelle hergestellt.

Nachteilig bei der bekannten Vorrichtung ist zum einen die notwendige große Materialhärte, die erforderlich ist, um verschleißarm die hohen Klemmkräfte zu tolerieren. Ein weiterer Nachteil besteht darin, dass der Schaltmoment nicht präzise bestimmt werden kann, da zwischen der Lösestellung und der Kopplungsstellung ein Spielwinkel von mindestens 30° liegt. Schließlich ist es ein Nachteil der bekannten Vorrichtung, dass sowohl der Übergang in die Koppelstellung als auch von der Koppelstellung in die Lösestellung eine aktive Betätigung erfordert, so dass insbesondere bei Ausfall der elektromagnetischen Betätigungsvorrichtung im Kopplungszustand keine automatische Entkopplung erfolgt.

Es ist die Aufgabe der vorliegenden Erfindung, eine alternative Kupplungseinrichtung zur Verfügung zu stellen, die ein schnelleres und präziseres Schalten ermöglicht und in einer bevorzugten Ausführungsform einen automatischen Übergang in die Lösestellung bei Ausfall der Betätigungseinrichtung sicherstellt.

Diese Aufgabe wird in Verbindung mit den Merkmalen des Oberbegriffs von Anspruch 1 gelöst durch ein koaxial zu der Schaltwelle angeordnetes Koppelglied, welches ein vom Koppelglied drehentkoppeltes Hubelement aufweist, das durch elektromagnetische Wechselwirkung mit einer umgebenden, bestrombaren Spule axial verschiebbares ist, und welches als drehfest mit der Schaltwelle verbundene Schiebemuffe ausgebildet ist, wobei das Koppelglied durch Axialverschiebung des Hubelementes zwischen seiner Koppelstellung, in der sich die Schiebemuffe wenigstens mittelbar in Formschluss mit dem Schaltkörper befindet, und seiner Lösestellung verschiebbar ist, in der kein Formschluss zwischen der Schiebemuffe und dem Schaltkörper besteht.

Grundidee der Erfindung ist die völlige Abkehr von dem bekannten Kupplungssystem. Erfindungsgemäß wird die Kopplung zwischen dem Schaltkörper und der Schaltwelle mittels einer axial verschieblichen drehfest auf der Schaltwelle gelagerten Schiebemuffe erreicht, die in der Koppelstellung einen Formschluss mit Bereichen des Schaltkörpers, insbesondere eines Schaltrades, eingeht. Der Formschluss kann dabei unmittelbar nach Art einer Klauenkupplung oder mittelbar über einen Synchron- und einen Kupplungskörper nach Art einer so genannten Synchronisation erfolgen.

Die Schaltung der erfindungsgemäßen Kupplungseinrichtung, das heißt insbesondere die Axialverschiebung der Schiebemuffe, erfolgt erfindungsgemäß über ein Hubelement, welches durch ein Magnetfeld, das sich bei Bestromung einer das Hubelement wenigstens bereichsweise umgebenden Spule aufbaut, axial verschoben wird. Dieses Hubelement ist geeignet, eine Axialkraft auf die Schiebemuffe auszuüben und sie dadurch axial zu verschieben. Dabei ist es günstig, die aus Spule und Hubelement aufgebaute elektromagnetische Stelleinheit bis auf die Axialverschieblichkeit des Hubelementes gehäusefest auszubilden. Dies ermöglicht insbesondere die Verwendung vorkonfektionierter Module. Um dennoch die axiale Wechselwirkung mit der Schiebemuffe realisieren zu können, ist erfindungsgemäß eine Drehentkopplung zwischen dem Hubelement und der Schiebemuffe vorgesehen.

Für die Ausbildung der Drehentkopplung und des Hubelementes sind verschiedene Varianten denkbar, von denen bevorzugte nachfolgend erläutert werden sollen und Gegenstand abhängiger Ansprüche sind. In jedem Fall ist es günstig, wenn die Schiebemuffe derart federvorgespannt ist, dass im stromlosen Zustand der Spule die Kupplung in ihrem Lösezustand gehalten wird. Beispielsweise kann die Federvorspannung im Inneren der topfartig ausgestalteten Schiebemuffe durch eine koaxial zur Schaltwelle angeordnete Spiralfeder ausgebildet sein, die sich einerseits am Topfboden der Schiebemuffe und andererseits an einem Synchronkörper einer Synchronisierung abstützt. Die Federvorspannung hat einerseits den Vorteil der Möglichkeit einer einfacheren Ausgestaltung der Drehentkopplung zwischen Hubelement und Schiebemuffe weil keine axial feste Verbindung zur Rückstellung gegeben sein muss, und andererseits den Vorteil einer "normally-open"-Auslegung der Kupplungseinrichtung. Letzteres bedeutet mit anderen Worten, dass sich die Kupplungseinrichtung im ausgeschalteten Fall der elektromagnetischen Stelleinheit im Lösezustand befindet.

Bei einer ersten vorteilhaften Ausführungsform der Erfindung ragt das Hubelement in das Innere der hohl ausgebildeten Schaltwelle hinein und ist dort über ein Axiallager mit einem die Schaltwelle nach außen durchsetzenden und drehfest mit der Schiebemuffe verbundenen Übertragungselement gekoppelt. Dies kann beispielsweise dadurch erfolgen, dass das Hubelement als Stößel einer der Schaltwelle axial benachbarten, elektromagnetischen Stelleinheit ausgebildet ist. Die Schaltwelle ist dabei als Hohlwelle ausgebildet. Der Stößel besteht aus einem Stößelhals und einem Stößelkopf, die im Inneren der Hohlwelle über ein Axiallager voneinander drehentkoppelt sind. Die hohle Schaltwelle weist seitlich wenigstens ein dem Axialhub des Stößels entsprechendes Langloch auf, durch welches ein Fortsatz des Stößelkopfs hindurchragt. Außerhalb der Schaltwelle ist dieser Fortsatz vorzugsweise formschlüssig, jedenfalls aber in Axialkräfte übertragender Weise mit der Schiebemuffe gekoppelt. Diese Ausführungsform hat den Vorteil, dass nur ein sehr schmaler Bauraum benötigt wird und insbesondere die Schaltwelle über ihre gesamte Länge zugänglich gestaltet werden kann. So kann beispielsweise ein dauerhaft drehfest mit der Schaltwelle gekoppelte Zahnrad je nach Anforderung an beliebiger Stelle der Schaltwelle angeordnet und mit korrespondierenden Zahnrädern radial benachbarter Getriebeteile in Verzahnungseingriff gebracht werden. Allerdings zeichnet sich diese Ausführungsform durch eine vergleichsweise große Baulänge aus, die durch die Länge der Schaltwelle und der axial benachbarten Stelleinheit vorgegeben wird.

Bei einer alternativen Ausführungsform ist vorgesehen, dass das Hubelement die Schaltwelle ringförmig umgibt. Beispielsweise kann die Schaltwelle bereichsweise in einem Kanal eines Gehäuses sitzen, in dessen Wandung die Spule der elektromagnetischen Stelleinheit gehäusefest angeordnet ist. Das Hubelement umgibt die Schaltwelle ringförmig und sitzt im Ringspalt zwischen der Schaltwelle und der Spule. Das Hubelement ist somit außerhalb der Schaltwelle angeordnet. Die Notwendigkeit der hohlen Ausgestaltung der Schaltwelle sowie eines die Schaltwellenwand durchgreifenden Elementes entfällt. Stattdessen kann vorzugsweise vorgesehen sein, dass das Hubelement über ein Axiallager mit einer äußeren Bodenfläche der topfartig ausgebildeten Schiebemuffe gekoppelt ist. Diese zweite Ausführungsform der Erfindung hat den Vorteil einer geringeren Baulänge. Allerdings reduziert sich hierbei auch die frei zugängliche Länge der Schaltwelle.

Die spezielle Art der Ausgestaltung der Axiallager kann vom Fachmann in Ansehung der speziellen Erfordernisse des Einzelfalls vorgenommen werden. Als eine günstige Ausführungsform hat sich die Ausbildung als Nadellager erwiesen.

Vorzugsweise ist bei jeder der zuvor erläuterten Ausführungsformen ein Dämpfungselement vorgesehen, das einen gedämpften Anschlag für das Hubelement in der Koppelstellung bildet. Ein solches Dämpfungselement ist vorzugsweise im Bereich der günstigerweise gehäusefesten elektromagnetischen Stelleinheit angeordnet. Beispielsweise können Anschlagplatten aus dämpfendem Material vorgesehen sein. Der Vorteil der Dämpfung ist insbesondere in der Unterdrückung von störend empfundenen Schaltgeräuschen zu sehen. Alternativ kann auch eine technisch aufwendigere, hydrodynamische Dampfung realisiert werden.

Wie bereits eingangs erwähnt, ist die Schiebemuffe vorzugsweise in Lösestellung federvorgespannt. Die Federkräfte sollten dabei so gering wie möglich ausgelegt sein, das bedeutet, gerade hinreichend, um im stromlosen Zustand der Spule die Reibungskräfte des Hubelementes und des Koppelgliedes, z.B. der Schiebemuffe, zu überwinden. Der Vorteil einer schwachen Auslegung der Rückstellfeder ist, dass die Kräfte, die in der Koppelstellung auf das Hubelement ausgeübt werden müssen, um die Kupplungseinrichtung in der Koppelstellung zu halten, gering sein können, was insbesondere einen kleinen Spulenstrom und einen insgesamt geringen Energieaufwand bedeutet.

Eine weitere Reduktion des Energieaufwandes in der Koppelstellung kann bei einer vorteilhaften Weiterbildung der Erfindung dadurch erreicht werden, dass eine Entlagenverriegelung des Hubelementes in Koppelstellung vorgesehen ist, wobei in der Koppelstellung ein schaltbares Verriegelungselement in eine axial begrenzte Ausnehmung des Hubelementes eingreift. Insbesondere kann günstigerweise vorgesehen sein, dass das Verriegelungselement ein elastisch vorgespannter Verriegelungskörper ist, dessen Vorspannung mittels einer elektromagnetischen Schalteinrichtung schaltbar ist. Als vorgespannter Verriegelungskörper kommt beispielsweise eine gegen das und senkrecht zu der Axialrichtung des Hubelementes federvorgespannte Kugel in Frage. Das Hubelement weist eine Ausnehmung auf, in welche die Verriegelungskugel bei Erreichen der Koppelstellung einrastet und eine Rückstellung verhindert. Dabei kann die Federvorspannung mittels eines kleinen Elektromagneten einstellbar oder schaltbar sein. Die Schaltung ist dabei günstigerweise so ausgelegt, dass zur Aufbringung einer Vorspannung, die zu einer von dem Hubelement nicht überwindbaren Verriegelung führt, nur anliegt, wenn eine Spule des Elektromagneten bestromt ist. Im stromlosen Zustand der Spule reduziert sich die Federvorspannung hingegen soweit, dass das von den Rückstellkräften der Koppelglied-Rückstellfeder beaufschlagte Hubelement die Verriegelung überwinden und in die Lösestellung zurückkehren kann. Diese Ausführungsform hat den Vorteil, dass die das Hubelement betätigende elektromagnetische Stelleinheit in der Koppelstellung nicht mit einem Haltestrom beaufschlagt werden muss. Vielmehr ist es ausreichend, nur den Elektromagneten der Verriegelungsvorrichtung mit einem typischerweise deutlich geringeren Haltestrom zu beaufschlagen. Dies erlaubt es auch, die Rückstellfeder des Hubelementes stärker auszulegen, was zu einer schnelleren Schaltung von der Koppelstellung zur Lösestellung führt.

Die Ansteuerung des Hubelementes erfolgt vorzugsweise so, dass während einer Schaltperiode, in der die Kupplungseinrichtung von ihrer Lösestellung in ihre Koppelstellung überführt wird, die Spule in einer ersten Phase, mit einem schnell auf einen Maximalwert ansteigenden Strom beschickt wird und in einer zweiten Phase mit einem langsam auf einen Haltewert abfallenden Strom beschickt wird, sodass das Hubelement in einem ersten Abschnitt seines Hubweges mit einer schnell auf einen Maximalwert ansteigenden Kraft beaufschlagt wird, in einem zweiten Abschnitt seines Hubweges konstant mit der Maximalkraft beaufschlagt wird und in einem dritten Abschnitt seines Hubweges mit einer langsam auf einen Haltewert, der ausreicht, um die Federvorspannung der Schiebemuffe zu kompensieren, abfallenden Kraft beaufschlagt wird.

Insbesondere beim Übergang von der Lösestellung in die Koppelstellung ist eine hohe Kraftbeaufschlagung des Hubelementes und der Schiebemuffe erforderlich, um Abweiskräfte zwischen der nach Art einer Klauenkupplung oder einer Synchronisierung arbeitenden Schiebemuffe von dem Schaltkörper zu überwinden. Nach Überwindung der Abweiskräfte, d.h. nach Einleitung des Formschlusses zwischen der Schiebemuffe und dem Schaltkörper ist nur noch eine geringere Kraft erforderlich, um den Übergang zur Koppelstellung zu vollenden. Je nach Ausführungsform mit oder ohne Endlagenverriegelung sind nur noch ein geringer Haltestrom bzw. eine geringe Haltekraft erforderlich bzw. kann die Stelleinrichtung stromlos geschaltet werden.

Weitere Merkmale und Vorteile der Erfindung ergeben sich aus der nachfolgenden, speziellen Beschreibung und den Zeichnungen: Es zeigen:
- Fig.: 1: eine erste Ausführungsform einer erfindungsgemäßen Kupplungseinrichtung.
- Fig.:2: eine zweite Ausführungsform einer erfindungsgemäßen Kupplungseinrichtung.
- Fig. 3:: eine schematische Darstellung einer Weiterbildung einer erfindungsgemäßen Kupplungseinrichtung.
- Fig. 4:: ein beispielhaftes Diagramm zur Ansteuerung der erfindungsgemäßen Kupplungseinrichtung.

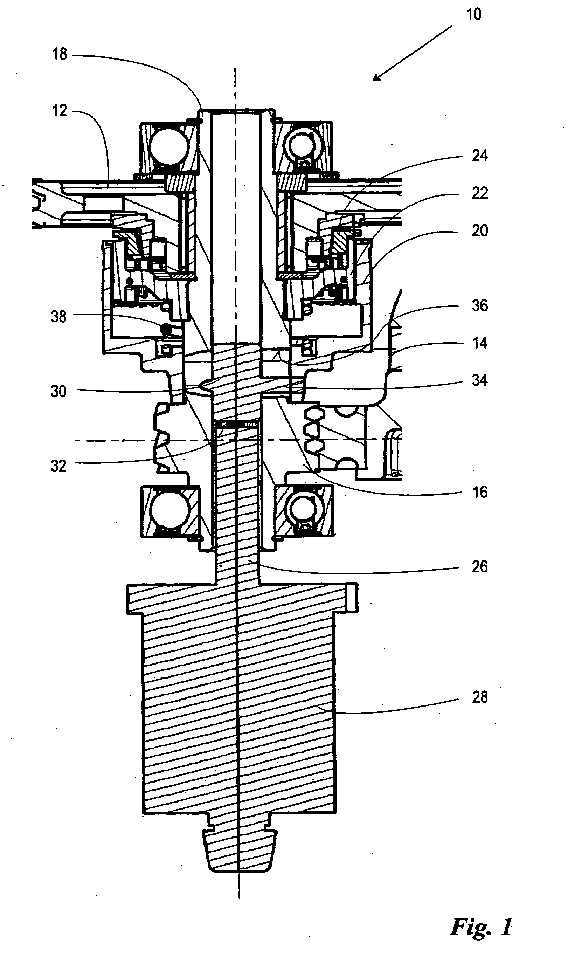

Figur 1 zeigt eine erste Ausführungsform einer erfindungsgemäßen Kupplungseinrichtung 10. Die Kupplungseinrichtung 10 dient der Kopplung eines nicht dargestellten Getriebebauteils, welches über sein Ausgangszahnrad mit dem Schaltrad 12 der Kupplungseinrichtung 10 in Verzahnungseingriff steht, mit einem nur bereichsweise dargestellten Getriebebauteil 14, welches über sein Eingangszahnrad mit einem Koppelrad 16 der Kupplungseinrichtung 10 in Verzahnungseingriff steht. Das Koppelrad 16 ist drehfest, bei der gezeigten Ausführungsform einstückig, mit der Schaltwelle 18 der Kupplungseinrichtung 10 verbunden. Die Kopplung erfolgt, indem das in der Lösestellung drehbar auf der Schaltwelle 18 gelagerte Schaltrad drehfest mit der Schaltwelle verbunden wird. Die drehfeste Verbindung zwischen dem Schaltrad 12 und der Schaltwelle 18 erfolgt über eine von manuellen Schaltgetrieben grundsätzlich bekannte Synchronisierung. Hierzu wird eine axial verschieblich auf der Schaltwelle 18 gelagerte Schiebemuffe 20 mittelbar über einen Synchronkörper 22 und einen Kupplungskörper 24 mit dem Schaltrad in Formschluss gebracht.

Zur Erreichung der Axialverschiebung der Schiebemuffe 20 ist eine elektromagnetische Stelleinheit vorgesehen. Bei der in Figur 1 dargestellten Ausführungsform ist die Schaltwelle 18 als Hohlwelle ausgeführt. Ein Stößelhals 26 der axial benachbarten elektromagnetischen Stelleinrichtung 28 ragt in das Innere der hohlen Schaltwelle 18 hinein. Der Stößelhals 26 ist in nicht näher dargestellter Weise mit einem Anker eines Elektromagneten gekoppelt, der in grundsätzlich bekannter Weise mit einer bestrombaren Spule der elektromagnetischen Stelleinheit 28 wechselwirkt. Die elektromagnetische Stelleinheit 28 ist dabei so ausgelegt, dass der Stößelhals 26 bei geeigneter Bestromung ausfährt. Im Inneren der hohlen Schaltwelle 18 ist ein Stößelkopf 30 angeordnet, der über ein Axiallager 32 axial mit dem Stößelhals 26 verbunden, von diesem aber drehentkoppelt ist. Der Stößelkopf 30 weist einen seitlichen Fortsatz 34 auf, der eine langlochartige Ausnehmung 36 in der Wandung der hohlen Schaltwelle 18 durchgreift. Außerhalb der Schaltwelle 18 steht der Fortsatz 34 mit der Schiebemuffe 20 in Formschluss. Grundsätzlich ist auch eine andere Art der Kopplung zwischen dem Fortsatz 34 und der Schiebemuffe 20, z.B. ein Kraft- oder Stoffschluss möglich. Der in Figur 1 dargestellte Formschluss hat jedoch im Hinblick auf die leichte Montage Fertigungsvorteile.

Zur Betätigung der Kupplungseinrichtung 10, d.h. zu ihrer Überführung von der Lösestellung in die Koppelstellung, wird die elektromagnetische Stelleinheit 28 so bestromt, dass der Stößelhals 26 ausfährt. In der Lösestellung dreht sich das Schaltrad 12 frei um die Schaltwelle 18, die je nach Bewegungszustand des benachbarten Getriebeteiles 14 ruht oder sich unabhängig von dem Schaltrad 12 dreht. Durch das Ausfahren des Stößelhalses 26 wird auch der Stößelkopf 30 vorgeschoben, sodass die Schiebemuffe 20 über ihre Verbindung mit dem Stößelkopf-Fortsatz 34 ebenfalls einen axialen Vortrieb erfährt, bis die drehfest mit der Schaltwelle 18 gekoppelte Schiebemuffe 20 in Formschluss mit dem drehfest mit dem Schaltrad 12 verbundenen Kupplungskörper 24 steht. Zur Verringerung der Schaltgeräusche und zur Reduzierung der Abnutzung ist ein auf bekannte Weise arbeitender Synchronkörper 22 zwischengeschaltet. Nach Herstellung des Formschlusses zwischen der Schiebemuffe 20 und dem Kupplungskörper 24 besteht eine drehfeste Verbindung zwischen dem Schaltrad 12 und der Schaltwelle 18, sodass die beiderseits benachbart der Kupplungseinrichtung 10 gelegenen Getriebeteile, die mit dem Schaltrad 12 bzw. dem Koppelrad 16 kämen, miteinander verbunden sind.

Zum Lösen der Kopplung, d.h. zur Überführung der Kupplungseinrichtung 10 von der Koppelstellung in die Lösestellung, ist eine Reduktion oder Abschaltung der Bestromung der elektromagnetischen Stelleinrichtung 28 ausreichend. Bei der gezeigten Ausführungsform stützt sich nämlich die Schiebemuffe 20 über eine Spiralfeder 38 gegen den Synchronkörper 22 ab. Hierdurch wird eine Rückstellkraft auf die Schiebemuffe 20 und über den Fortsatz 34 auf den Stößelkopf 30 und Stößelhals 26 ausgeübt. Diese Rückstellkraft ist vorzugsweise gerade so groß ausgelegt, dass Reibungskräfte überwunden werden können und bei reduzierter oder abgeschalteter Bestromung der Stelleinrichtung 28 der Formschluss zwischen der Schiebemuffe 20 und dem Kupplungskörper 24 gelöst wird. Hierdurch wird sichergestellt, dass beispielsweise bei Ausfall der elektrischen Versorgung die Kopplung der verbundenen Getriebeteile gelöst wird.

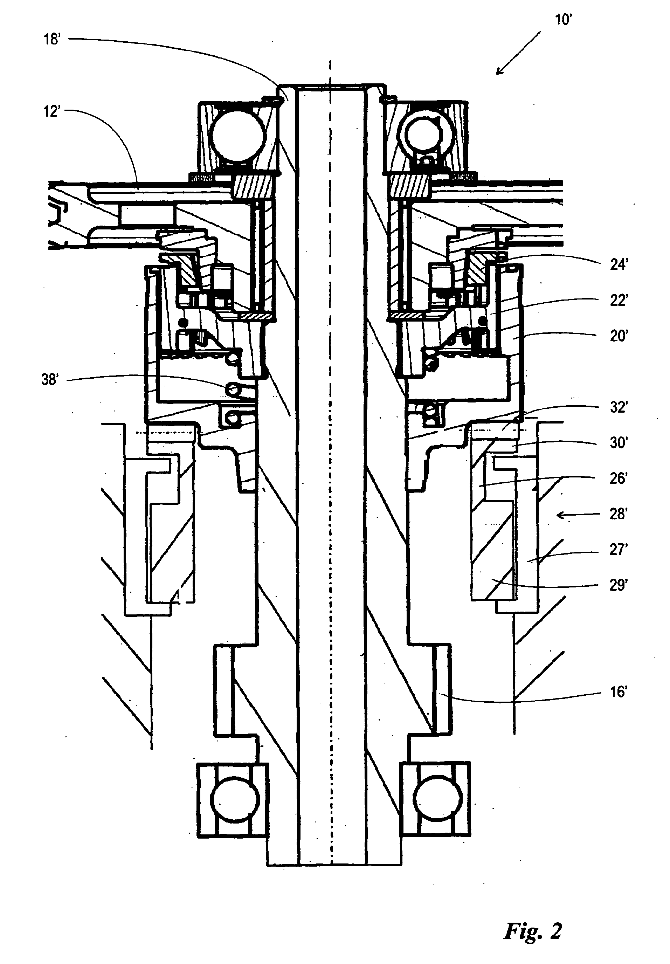

Figur 2 zeigt eine zweite Ausführungsform einer erfindungsgemäßen Kupplungseinrichtung 1,0'. In Figur 2 wurden für gleiche oder äquivalente Bauteile die gleichen Bezugszeichen verwendet, wie in Figur 1, jeweils versehen mit einem "'". Zur Vermeidung von Wiederholungen wird nachfolgend nur auf die Unterschiede zur Ausführungsform von Figur 1 eingegangen.

Bei der Ausführungsform von Figur 2 ist die Schaltwelle 18', die hier nicht zwingend als Hohlwelle ausgeführt sein muss, ringförmig von der elektromagnetischen Stelleinrichtung 28' umgeben. Diese weist eine gehäusefeste Spule 27' auf, die mit einem innenliegenden Elektromagnet-Anker 29' elektromagnetisch wechselwirkt. Der Anker 29' ist über einen Stößelhals 26' mit einem außerhalb der Spule liegenden, ringförmigen Stößelkopf 30' verbunden. Der Stößelkopf 30' stützt sich über ein ringförmiges Axiallager, vorzugsweise ein Nadellager, an einer unteren Bodenseite der Schiebemuffe 20' ab. Das Axiallager 32' bildet bei dieser Ausführungsform die Drehentkopplung zwischen der Stelleinrichtung 28' und der Schiebemuffe 20'.

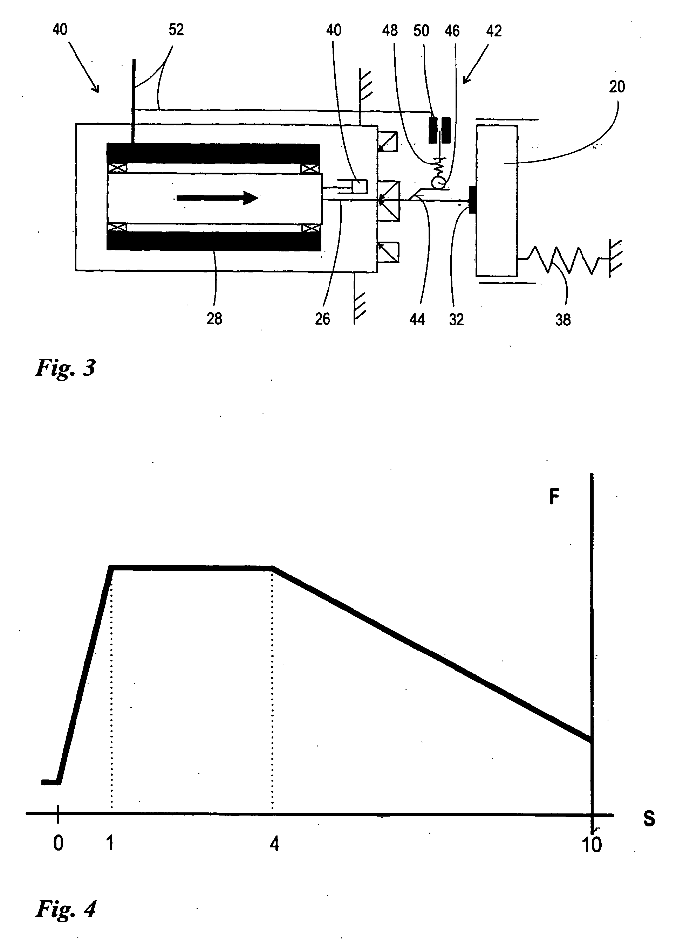

Figur 3 zeigt eine schematische Darstellung einer Weiterbildung der Erfindung, die sowohl auf die Ausführungsform von Figur 1 als auch von Figur 2 sowie auch auf äquivalente, nicht ausdrücklich dargestellte Ausführungsformen anwendbar ist. Zur Vereinfachung der Darstellung werden für gleiche oder äquivalente Bauteile die Bezugszeichen von Figur 1 verwendet.

Die Ausführungsform von Figur 3 weist zwei in den Figuren 1 und 2 nicht dargestellte Besonderheiten auf. Zum einen ist das von der elektromagnetischen Stelleinrichtung 28 betätigte Hubelement 26 mit einer Endlagendämpfung 40 gekoppelt. Die Endlagendämpfung kann konstruktiv als dämpfende Anschlagscheibe ausgebildet sein. Alternativ kann auch eine hydrodynamische Dämpfung realisiert sein, die jedoch aufgrund des höheren Bauaufwandes regelmäßig nicht bevorzugt ist. Die Endlagendämpfung verhindert als störend empfundene Schaltgeräusche. Zum anderen weist die Ausführungsform von Figur 3 eine Endlagenverriegelung 42 auf. Hierzu ist das Hubelement 26 mit einer Rampe 44 versehen, die beispielsweise als eine axial begrenzte Ausnehmung in einem Stößelschaft ausgebildet sein kann. Ein in Figur 3 als Verriegelungskugel 46 ausgebildeter Verriegelungskörper liegt mit Federvorspannung 48 an dem Hubelement 26 an und rastet in der Verriegelungsstellung an der Rampe 44 ein. Die Federvorspannung 48 ist dabei über einen vorzugsweise klein dimensionierten Elektromagneten 50 steuerbar bzw. an- und abschaltbar. Der Elektromagnet 50 ist vorzugsweise elektrisch mit der Stelleinrichtung 28 gekoppelt, d.h. dass die Federvorspannung 48 aktiviert ist, wenn das Hubelement 26 ausfährt. Auf diese Weise wird das Hubelement 26 in der Koppelstellung verriegelt. Die Bestromung der Stelleinrichtung 28 kann dann vollständig abgeschaltet werden. Insbesondere ist es nicht erforderlich, einen Haltestrom aufzubringen, der ausreicht, die Rückstellkräfte der Rückstellfeder 38 zu überwinden. Diese Rückstellkräfte werden nämlich von der Verriegelungskugel 48 in ihrer Verriegelungsstellung abgestützt. Die hierzu notwendigen Ströme in dem Elektromagneten 50, die erforderlich sind, um ein Halten der Verriegelungskugel 46 in der Verriegelungsstellung zu gewährleisten, können deutlich geringer dimensioniert werden als entsprechende Halteströme der Stelleinheit 28. Zur Rücküberführung in die Lösestellung der Kupplungseinrichtung ist es dann ausreichend, den Verriegelungstrom im Elektromagneten 50 ganz abzuschalten. Bei geeigneter Auslegung der Rampe 44 und geeigneter Dimensionierung der Federvorspannung 48 wird dann die Verriegelung aufgehoben oder überwunden und das Hubelement 26 kann in die Lösestellung zurückgleiten. Beide oben diskutierten Weiterbildungsmerkmale der Erfindung, d.h. Endlagendämpfung und Endlagenverriegelung können gemeinsam oder einzeln in jeder erfindungsgemäßen Kupplungseinrichtung eingesetzt werden, wobei der Fachmann im Lichte der hiesigen Offenbarung ohne weiteres eine geeignete konstruktive Lösung zu finden vermag.

Figur 4 zeigt eine beispielhafte Ansteuerungskurve eines Hubelementes 26 einer erfindungsgemäßen Kupplungseinrichtung. Der Graph von Figur 4 stellt die von der Stelleinrichtung 28 aufgebrachte Kraft F über dem Hubweg S dar. Zunächst wird die Spule der Stelleinheit 28 mit hohen Strom beaufschlagt, sodass das Hubelement 26 eine schnell auf einen Maximalwert ansteigende Vortriebskraft erfährt. Bei einer typischen Auslegung liegt diese Maximalkraft etwa im Bereich von 150-300 Newton. Die Kraft ist erforderlich, um die Abweiskräfte beim Eingehen des Formschlusses zwischen der Schiebemuffe 20 und dem Kupplungskörper 24 zu überwinden, wobei diese Abweiskräfte im Fall einer einfachen Klauenkupplung höher sind als im Fall einer Synchronisierung wie in den Figuren 1 und 2. Nach dem Überwinden der Abweiskräfte ist für den Rest des Stellweges nur noch eine geringe Kraft erforderlich, die ausreicht, die Rückstellkräfte der Feder 38 zu überwinden und die Schiebmuffe 20 in ihre formschlüssige Endposition zu befördern. Nach Erreichen des Formschlusses ist lediglich eine geringe Rückstellfederkraft erforderlich, um die Kupplungseinrichtung in der Koppelstellung zu halten. Im Fall einer Endlagenverriegelung, wie in Figur 3 gezeigt, kann die Haltekraft auf Null reduziert werden.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Variationsspektrum anhand gegeben. Insbesondere kann die konkrete Ausgestaltung des Formschlusses zwischen Schaltwelle und Schaltrad den Anforderungen des Einzelfalls angepasst werden.

### Bezugszeichenliste

- 10, 10': Kupplungseinrichtung
- 12, 12': Schaltrad
- 14: benachbarter Getriebeteil
- 16, 16': Koppelrad
- 18, 18': Schaltwelle
- 20, 20': Schiebemuffe
- 22, 22': Synchronkörper
- 24, 24': Kupplungskörper
- 26, 26': Stößelhals
- 27': Spule
- 28, 28': elektromagnetische Stelleinheit
- 29': Elektromagnet-Anker
- 30, 30': Stößelkopf
- 32, 32': Axiallager
- 34: Fortsatz von 30
- 36: Langloch in 18
- 38, 38': Rückstellfeder
- 40: Endlagendämpfung
- 42: Endlagenverriegelung
- 44: Rampe
- 46: Verriegelungskugel
- 48: Federvorspannung
- 50: Verriegelungsmagnet

## Patentansprüche

1. Elektrisch betätigte Kupplungseinrichtung zum wahlweisen Herstellen und Lösen einer drehfesten Verbindung zwischen einer Schaltwelle (18; 18') und einem koaxial auf der Schaltwelle (18; 18') angeordneten Schaltkörper (12; 12') durch elektrisch angesteuerte Verstellung eines Koppelgliedes, das zwischen einem Lösezustand, in dem die Schaltwelle (18; 18') und der Schaltkörper (12; 12') gegeneinander verdrehbar sind, und einem Koppelzustand, in dem das Koppelglied sowohl die Schaltwelle (18; 18') als auch das Schaltelement (12; 12') drehfest kontaktiert, verstellbar ist, **gekennzeichnet durch** ein koaxial zu der Schaltwelle (18; 18') angeordnetes Koppelglied, welches ein vom Koppelglied drehentkoppeltes Hubelement (26,26') aufweist, das **durch** elektromagnetische Wechselwirkung mit einer umgebenden, bestrombaren Spule (27') axial verschiebbares ist, und welches als drehfest mit der Schaltwelle (18,18') verbundene Schiebemuffe (20,20') ausgebildet ist, wobei das Koppelglied **durch** Axialverschiebung des Hubelementes (26,26') zwischen seiner Koppelstellung, in der sich die Schiebemuffe wenigstens mittelbar in Formschluss mit dem Schaltkörper (12; 12') befindet, und seiner Lösestellung verschiebbar ist, in der kein Formschluss zwischen der Schiebemuffe (20; 20') und dem Schaltkörper (12; 12') besteht.

2. Kupplungseinrichtung nach Anspruch 1, **dadurch gekennzeichnet, dass** die Schiebemuffe (20; 20') derart federvorgespannt ist, dass im stromlosen Zustand der Spule (27') die Kupplung in ihrem Lösezustand gehalten wird.

3. Kupplungseinrichtung nach einem der vorangehenden Ansprüche, **dadurch gekennzeichnet, dass** das Hubelement (26, 30) in das Innere der hohl ausgebildeten Schaltwelle (18) hineinragt und dort über ein Axiallager (32) mit einem die Schaltwelle (18) nach außen durchsetzenden und drehfest mit der Schiebemuffe (20) verbundenen Übertragungselement (34) gekoppelt ist.

4. Kupplungseinrichtung nach Anspruch 3, **dadurch gekennzeichnet, dass** das Hubelement als Stößel (26, 30) einer der Schaltwelle (18) axial benachbarten, elektromagnetischen Stelleinheit (28) ausgebildet ist.

5. Kupplungseinrichtung nach einem der Ansprüche 1 bis 2, **dadurch gekennzeichnet, dass** das Hubelement (26, 30) die Schaltwelle (18') ringförmig umgibt.

6. Kupplungseinrichtung nach Anspruch 5, **dadurch gekennzeichnet, dass** das Hubelement (26', 30') über ein Axiallager mit einer Bodenfläche der Schiebemuffe (20,20') gekoppelt ist.

7. Kupplungseinrichtung nach einem der vorangehenden Ansprüche, **gekennzeichnet durch** ein Dämpfungselement (40), das einen gedämpften Anschlag für das Hubelement (26; 26'; 30') in der Koppelstellung bildet.

8. Kupplungseinrichtung nach einem der vorangehenden Ansprüche, **gekennzeichnet durch** dass eine Endlagenverriegelung (42) des Hubelementes (26; 26', 30') in Kuppelstellung vorgesehen ist, wobei in der Koppelstellung ein schaltbares Verriegelungselement (46) in eine axial begrenzte Ausnehmung (44) des Hubelementes (26; 26', 30') eingreift.

9. Kupplungseinrichtung nach Anspruch 8, **dadurch gekennzeichnet, dass** das Verriegelungselement ein elastisch vorgespannter Verriegelungskörper (46) ist, dessen Vorspannung mittels einer elektromagnetischen Stelleinrichtung (50) schaltbar ist.

10. Verfahren zum Schalten einer Kupplungseinrichtung (10; 10') nach einem der Ansprüche 2 und 3 bis 9, soweit rückbezogen auf Anspruch 2, **dadurch gekennzeichnet, dass** während einer Schaltperiode, in der die Kupplungseinrichtung (10; 10') von ihrer Lösestellung in ihre Koppelstellung überführt wird, die Spule (27) in einer ersten Phase, mit einem schnell auf einen Maximalwert ansteigenden Strom beschickt wird und in einer zweiten Phase mit einem langsam auf einen Haltewert abfallenden Strom beschickt wird, sodass das Hubelement (26; 26') in einem ersten Abschnitt seines Hubweges mit einer schnell auf einen Maximalwert ansteigenden Kraft beaufschlagt wird, in einem zweiten Abschnitt seines Hubweges konstant mit der Maximalkraft beaufschlagt wird und in einem dritten Abschnitt seines Hubweges mit einer langsam auf einen Haltewert, der ausreicht, um die Federvorspannung der Schiebemuffe (20; 20') zu kompensieren, abfallenden Kraft beaufschlagt wird.

## Claims

1. Electrically actuated clutch device for selectively producing and releasing a rotationally conjoint connection between a shift shaft (18; 18') and a shift body (12; 12'), which is arranged coaxially on the shift shaft (18; 18'), by means of the electrically actuated adjustment of a coupling member which can be adjusted between a release state, in which the shift shaft (18; 18') and the shift body (12; 12') are rotatable relative to one another, and a coupling state, in which the coupling member makes rotationally conjoint contact both with the shift shaft (18; 18') and also with the shift element (12; 12'), **characterized by** a coupling member which is arranged coaxially with respect to the shift shaft (18; 18') and which has a stroke element (26, 26') which is rotationally decoupled from the coupling member and which can be displaced axially by electromagnetic interaction with a surrounding electrically energizable coil (27') and which is formed as a sliding sleeve (20, 20') connected in a rotationally conjoint manner to the shift shaft (18, 18'), wherein the coupling member can, by axial displacement of the stroke element (26, 26'), be displaced between its coupling position, in which the sliding sleeve is in at least indirect positively locking engagement with the shift body (12; 12'), and its release position, in which there is no positively locking engagement between the sliding sleeve (20; 20') and the shift body (12; 12').

2. Clutch device according to Claim 1, **characterized in that** the sliding sleeve (20; 20') is spring-preloaded such that, when the coil (27') is in the electrically deenergized state, the clutch is held in its release state.

3. Clutch device according to one of the preceding claims, **characterized in that** the stroke element (26, 30) projects into the interior of the hollow shift shaft (18) and, there, is coupled via an axial bearing (32) to a transmission element (34) which extends through the shift shaft (18) to the outside and which is connected in a rotationally conjoint manner to the sliding sleeve (20).

4. Clutch device according to Claim 3, **characterized in that** the stroke element is formed as a plunger (26, 30) of an electromagnetic actuating unit (28) which is axially adjacent to the shift shaft (18).

5. Clutch device according to one of Claims 1 to 2, **characterized in that** the stroke element (26, 30) annularly surrounds the shift shaft (18').

6. Clutch device according to Claim 5, **characterized in that** the stroke element (26', 30') is coupled via an axial bearing to a base surface of the sliding sleeve (20, 20').

7. Clutch device according to one of the preceding claims, **characterized by** a damping element (40) which forms a damped stop for the stroke element (26; 26'; 30') in the coupling position.

8. Clutch device according to one of the preceding claims, **characterized in that** end position locking (42) of the stroke element (26; 26'; 30') in the coupling position is provided, wherein in the coupling position, a switchable locking element (46) engages into an axially delimited recess (44) of the stroke element (26; 26'; 30').

9. Clutch device according to Claim 8, **characterized in that** the locking element is an elastically preloaded locking body (46) whose preload can be switched by means of an electromagnetic actuating device (50).

10. Method for switching a clutch device (10; 10') according to one of Claims 2 and 3 to 9 where referred back to Claim 2, **characterized in that**, during a switching period in which the clutch device (10; 10') is transferred from its release position into its coupling position, the coil (27) is supplied, in a first phase, with an electrical current which rises quickly to a maximum value and in a second phase, with an electrical current which falls slowly to a holding value, such that the stroke element (26; 26') is acted on, in a first segment of its stroke travel, with a force which rises quickly to a maximum value, in a second segment of its stroke travel, constantly with the maximum force, and in a third segment of its stroke travel, with a force which falls slowly to a holding value sufficient to compensate the spring preload of the sliding sleeve (20; 20').

## Revendications

1. Dispositif d'embrayage à commande électrique pour établir et relâcher au choix une liaison solidaire en rotation entre un arbre de changement de vitesse (18 ; 18') et un corps de changement de vitesse (12 ; 12') disposé dans le plan coaxial sur l'arbre de changement de vitesse (18 ; 18') par le biais d'un réglage par commande électrique d'un maillon de couplage pouvant être déplacé entre un état de relâchement dans lequel l'arbre de changement de vitesse (18 ; 18') et le corps de changement de vitesse (12 ; 12') peuvent être pivotés l'un par rapport à l'autre et un état de couplage dans lequel le maillon de couplage entre en contact solidairement en rotation tant avec l'arbre de changement de vitesse (18 ; 18') qu'avec l'élément de changement de vitesse (12 ; 12'), **caractérisé par** la présence d'un maillon de couplage disposé dans le plan coaxial par rapport à l'arbre de changement de vitesse (18 ; 18'), ledit maillon comportant un élément de levage (26, 26') découplé en rotation du maillon de couplage pouvant être déplacé dans le plan axial par un effet électromagnétique alternatif à l'aide d'une bobine (27') alimentable en courant placée autour dans le plan axial et ledit maillon étant réalisé sous la forme d'un manchon coulissant (20, 20') relié solidairement en rotation à l'arbre de changement de vitesse (18, 18'), le maillon de couplage pouvant se déplacer, du fait du déplacement axial de l'élément de levage (26, 26'), entre sa position de couplage dans laquelle le manchon coulissant est placé au moins de façon indirecte en complémentarité de formes avec le corps de changement de vitesse (12 ; 12') et sa position de relâchement dans laquelle il n'y a aucune complémentarité de formes entre le manchon coulissant (20 ; 20') et le corps de changement de vitesse (12 ; 12').

2. Dispositif d'embrayage selon la revendication 1, **caractérisé en ce que** le manchon coulissant (20 ; 20') est précontraint de telle sorte par ressort que dans l'état non alimenté en courant de la bobine (27'), l'embrayage est maintenu dans son état de relâchement.

3. Dispositif d'embrayage selon l'une quelconque des revendications précédentes, **caractérisé en ce que** l'élément de levage (26, 30) ressort à l'intérieur de l'arbre de changement de vitesse (18) creux et est couplé à cet endroit avec un élément de transmission (34) relié solidairement en rotation au manchon coulissant (20) et introduisant vers l'extérieur l'arbre de changement de vitesse (18) par le biais d'un palier axial (32).

4. Dispositif d'embrayage selon la revendication 3, **caractérisé en ce que** l'élément de levage prend la forme d'un coulisseau (26, 30) d'une unité de réglage (28) électromagnétique connexe dans le plan axial à l'arbre de changement de vitesse (18).

5. Dispositif d'embrayage selon l'une quelconque des revendications 1 à 2, **caractérisé en ce que** l'élément de levage (26, 30) entoure l'arbre de changement de vitesse (18') en prenant une forme annulaire.

6. Dispositif d'embrayage selon la revendication 5, **caractérisé en ce que** l'élément de levage (26', 30') est couplé à une surface de fond du manchon coulissant (20, 20') par le biais d'un palier axial.

7. Dispositif d'embrayage selon l'une quelconque des revendications précédentes, **caractérisé par** la présence d'un élément d'amortissement (40) formant une butée amortissante pour l'élément de levage (26 ; 26' ; 30') dans la position de couplage.

8. Dispositif d'embrayage selon l'une quelconque des revendications précédentes, **caractérisé en ce qu'**un verrouillage de position d'extrémité (42) de l'élément de levage (26 ; 26', 30') est prévu dans la position de couplage, un élément de verrouillage (46) commutable s'engrenant dans un évidement (44) délimité dans le plan axial de l'élément de levage (26 ; 26', 30') dans la position de couplage.

9. Dispositif d'embrayage selon la revendication 8, **caractérisé en ce que** l'élément de verrouillage est un corps de verrouillage (46) précontraint de façon élastique dont la précontrainte peut être commutée à l'aide d'un dispositif de réglage (50) électromagnétique.

10. Procédé de changement de vitesse d'un dispositif d'embrayage (10 ; 10') selon l'une quelconque des revendications 2 et 3 à 9, en référence à la revendication 2, **caractérisé en ce que** pendant une période de changement de vitesse pendant laquelle le dispositif d'embrayage (10 ; 10') est guidé de sa position de relâchement dans sa position de couplage, la bobine (27) est alimentée, lors d'une première phase, avec un courant grimpant rapidement jusqu'à sa valeur maximale et est alimentée, lors d'une deuxième phase, avec un courant décroissant lentement jusqu'à sa valeur de retenue, de sorte que l'élément de levage (26 ; 26') est alimenté dans une première section de sa course de levage avec une force grimpant rapidement jusqu'à une valeur maximale, avant d'être alimenté de façon constante dans une deuxième section de sa course de levage avec la force maximale et d'être alimenté dans une troisième section de sa course de levage avec une valeur de retenue décroissant lentement suffisante pour compenser la précontrainte par ressort du manchon coulissant (20 ; 20').
